# EUROPEAN PATENT SPECIFICATION

(11) **EP 3 016 015 B1**
(45) Date of publication and mention of the grant of the patent: **07.10.2020**
(21) Application number: 14818064.9
(22) Date of filing: 06.06.2014
(51) Int. Cl.: G06F 21/84, G06F 21/74, G06F 21/57

(54) **METHOD FOR INDICATING OPERATING ENVIRONMENT OF MOBILE DEVICE AND MOBILE DEVICE CAPABLE OF INDICATING OPERATING ENVIRONMENT**
VERFAHREN ZUR ANZEIGE EINER BETRIEBSUMGEBUNG EINER MOBILEN VORRICHTUNG UND MOBILE VORRICHTUNG MIT ANZEIGE DER BETRIEBSUMGEBUNG
PROCÉDÉ INDIQUANT UN ENVIRONNEMENT D'EXPLOITATION D'UN DISPOSITIF MOBILE ET DISPOSITIF MOBILE POUVANT INDIQUER UN ENVIRONNEMENT D'EXPLOITATION

(30) Priority: 25.06.2013 CN 201310255179
(43) Date of publication of application: 04.05.2016
(73) Proprietor: China Unionpay Co., Ltd, Shanghai 200135 (CN)
(72) Inventor: CHAI, Hongfeng, Shanghai 200135 (CN); LU, Zhijun, Shanghai 200135 (CN); HE, Shuo, Shanghai 200135 (CN); GUO, Wei, Shanghai 200135 (CN); ZHOU, Yu, Shanghai 200135 (CN); CHEN, Chengqian, Shanghai 200135 (CN)
(74) Representative: Seemann & Partner Patentanwälte mbB
(86) International application number: PCT/CN2014/079328
(87) International publication number: WO 2014/206192

(56) References cited:
- EP-A1- 1 224 822
- EP-A1- 2 330 531
- EP-A2- 1 526 424
- CN-A- 1 609 809
- CN-A- 101 529 366
- CN-A- 102 087 687

## Description

### FIELD OF THE INVENTION

The invention relates to security of mobile device, and in particular to a method for indicating an operating environment of a mobile device and a mobile device capable of indicating an operating environment.

### BACKGROUND

The operating system of current mobile devices may have system bugs due to the strong functions, complicated codes and open platform of the system. These bugs will pose a threat to the security of the operating system.

On the other hand, user's information may be leaked when the user downloads and installs malwares (e.g., Trojan, virus). The human-machine interface (e.g., screen, keyboard, etc.) of a mobile device (e.g., a smart cell-phone) is the most important means for enabling an interaction between the user and applications in the mobile device. Therefore, when the user uses the human-machine interface to input information (e.g., private information such as account of bank card and password, etc.), the information may be acquired by malwares.

In the prior art, by running a secure operating system, the malwares are prevented from stealing and distorting private information. The secure operating system refers to a closed operating system running in a secure mode. It provides a credible executing environment for the mobile device and is independent from an operating system in a non-secure mode. The secure operating system can be for example a TEE solution based on the Trust Zone technology of the ARM company. The TEE is a credible executing environment platform in a secure mode. In this platform, under the control of secure code, malwares can not have access to data resource in this secure mode or steal data resource, e.g., user's information. For example, for the human-machine interface, when in the secure mode of mobile device, the human-machine interface is only controlled by the secure system so that users can interact with applications via the human-machine interface in a secure manner. In other words, in the secure mode, the human-machine interface is credible.

As a common interface, the screen of mobile device can be accessed and used by all the programs in the mobile device. Although the reliability of the screen can be ensured under the control of the secure operating system, the security is still facing challenge. For example, the malwares can simulate an operating environment in the secure operating system to confuse the user and steal user's information. Therefore, in order to further increase the security of using mobile device, there is a need for a solution for indicating the operating environment so as to inform the user of the operating environment of current mobile device, including: whether the mobile device is currently in a secure mode, i.e., whether the currently running operating system is a secure operating system (e.g., using reliable indicating information to inform the user that the currently operating human-machine interface is really credible). In addition, due to the presence of plug-in type carriers, a dynamic use of applications will also become a potential threat to user's information. Therefore, informing the user of the operating environment of current mobile device preferably can further comprise indicating the security level of the currently operating applications of the mobile device.

EP 1 526 424 A2 discloses a method for maintaining the security of data displayed on a display for a system comprising a secured execution environment and a second execution environment, comprising: storing an image of at least one nexus graphical user interface element associated with a first process running on said secured execution environment; and displaying said nexus graphical user interface element on said display completely on a display, such that no part of said nexus graphical user interface element is obscured by a graphical user interface element associated with said second execution environment on said display.

Further, EP 2 330 531 A1 refers to a state notification apparatus. The apparatus comprises a holding unit that, when one or more secure runtime environments and one or more non-secure runtime environments are selectively executed in a foreground, holds an identifier of a runtime environment that is being executed in the foreground; a determination unit that determines a state of the runtime environment executed in the foreground based on the identifier held by the holding unit; and a notification unit that causes a hardware device that cannot be accessed from the one or more non-secure runtime environments to notify the state determined by the determination unit.

Above all, EP 1 224 822 A1 discloses a portable communication apparatus having a man-machine interface, a controller, an operating system, a local storage device for storing a first application, a secure resource which is only accessible from the operating system, and a wireless interface for connecting the portable communication apparatus to a remote device.

The object of the invention is to improve the indicating an operating environment of a mobile device and to provide an improved mobile device.

### SUMMARY OF THE INVENTION

According to an object of the invention, a method for indicating an operating environment of a mobile device is disclosed, comprising the following steps: generating personalized information and storing the personalized information in a storage area that can be only accessed by a secure operating system, and displaying the personalized information on a display area of the mobile device when the mobile device enters the secure operating system so as to inform the following steps: generating personalized information when the mobile device is started for the first time and storing the personalized information in a storage area that can be only accessed by a secure operating system, and displaying the personalized information on a display area of the mobile device when the mobile device enters the secure operating system so as to inform the user of the currently running operating system, displaying a final credibility level of the currently operating application on the display area of the mobile device when the mobile device is running in the secure operating system so as to inform the user of the security of the currently operating application; wherein the final credibility level of application is generated based on the credibility level of application and the credibility level of a carrier of the application; the credibility level of application is based on whether the application has been verified by the secure operating system and/or based on the carrier of the application, and wherein the carrier is a physical secure element or a virtual secure element, and the credibility level of the carrier of the application is based on whether the carrier has been verified by the secure operating system.

Preferably, the method further comprises the following step: generating the personalized information based on an input from the user, the personalized information comprising text, image or a combination of text and image.

Preferably, the method further comprises the following step: storing the credibility level of application, the credibility level of the carrier of the application and an application identifier into a credibility level list, and acquiring the final credibility level of current application according to the credibility level list when an application is chosen and started to server as the current application.

According to another object of the invention, a mobile device capable of indicating an operating environment is disclosed, the mobile device comprising: a personalized information module configured to generate personalized information when the mobile device is started for the first time and to store the personalized information in a storage area that can be only accessed by an indicator module in a secure operating system, and the indicator module is configured to display the personalized information on a display area of the mobile device when the mobile device enters the secure operating system so as to inform the user of the currently running operating system; wherein the indicator module is further configured to display a final credibility level of the currently operating application on the display area of the mobile device when the mobile device is running in the secure operating system so as to inform the user of the security of the currently operating application; the final credibility level of application is generated based on the credibility level of application and the credibility level of a carrier of the application, wherein the credibility level of application is based on whether the application has been verified by the secure operating system and/or based on the carrier of the application, and wherein the carrier is a physical secure element or a virtual secure element, and the credibility level of the carrier of the application is based on whether the carrier has been verified by the secure operating system.

Preferably, the personalized information module is configured to generate the personalized information based on an input from the user, the personalized information comprising text, image or a combination of text and image.

Preferably, the indicator module is further configured to store the credibility level of application, the credibility level of the carrier of the application and an application identifier into a credibility level list, and the indicator module is configured to acquire the final credibility level of current application according to the credibility level list when an application is chosen and started to server as the current application.

### BRIEF DESCRIPTION OF THE DRAWINGS

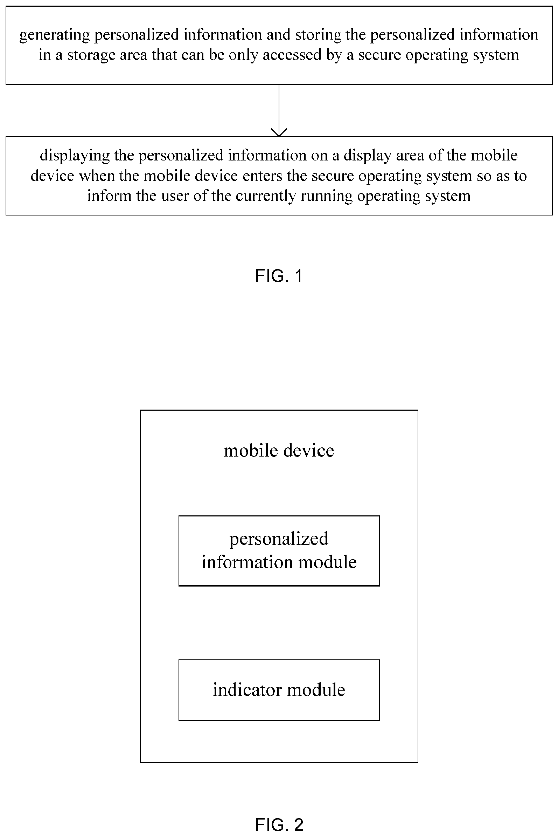

Those skilled in the art will comprehend various aspects of the invention more clearly after reading the specific embodiments of the invention with reference to the accompanying drawings. It will be appreciated by those skilled in the art that the drawings are merely used for explaining the technical solutions of the invention in connection with the specific embodiments, and are not intended to limit the scope of protection of the invention, wherein Fig. 1 is a schematic view of a method for indicating an operating environment of a mobile device according to an embodiment of the invention.

Fig. 2 is a schematic view of a mobile device capable of indicating an operating environment according to an embodiment of the invention.

### DETAILED DESCRIPTION

The specific embodiments of the invention will be further described in detail hereinafter with reference to the accompanying drawings. In the following description, for an illustrative purpose, many specific details are described so as to provide a thorough understanding of one or more aspects of the embodiments. However, it is obvious to those skilled in the art that one or more aspects of various embodiments can be implemented with these specific details provided to a less degree. Therefore, the following description should not be considered as limiting; rather, the scope of protection is defined by the appended claims.

Fig. 1 is a schematic view of a method for indicating an operating environment of a mobile device according to an embodiment of the invention. As show in Fig. 1, the method for indicating an operating environment of a mobile device comprises the following steps: a first step: generating personalized information and storing the personalized information in a storage area that can be only accessed by a secure operating system;
a second step: displaying the personalized information on a display area of the mobile device when the mobile device enters the secure operating system so as to inform the user of the currently running operating system.

In an embodiment, the personalized information in the storage area can be only accessed by an indicator module in the secure operating system so that the personalized information is prevented from being acquired by malwares.

In an embodiment, the personalized information can be generated based on an input from the user, wherein the personalized information comprises text, image or a combination of text and image. The personalized information is generated by the user and thus has unique characteristic. Therefore, such information is prevented from being faked by malwares in a non-secure mode to fraud users. As an example, such personalized information can be drawings edited by users, patterns chosen by users, images captured by users and texts input by users (e.g., user's favorite food and animal).

In an embodiment, the personalized information is generated when the mobile device is started for the first time. When the mobile device is started for the first time, since the mobile device is not yet used, it is therefore credible and secure, and the security of the input personalized information can be ensured.

In an embodiment, the display area can be a particular area set on the screen of the mobile device.

In an embodiment, a final credibility level of the currently operating application is further displayed on the display area of the mobile device when the mobile device is running in the secure operating system so as to inform the user of the security of the currently operating application. For example, the personalized information can be displayed on the left of the display area, and the final credibility level of application can be displayed on the right of the display area. The final credibility level of application represents the ability of anti-distorting, anti-leaking, anti-faking and anti-attack. In this way, the user is aware of the security of the currently operating application so that the user will heighten his/her vigilance when facing an application having a low credibility level and further confirm whether the application to be operated is the application he/she needs.

The final credibility level of application is generated based on the credibility level of application and the credibility level of a carrier of the application.

The credibility level of application is based on whether the application has been verified by the secure operating system and/or based on the carrier of the application, wherein the carrier is a physical secure element or a virtual secure element. By way of example, for the same application, if the application is in the physical secure element, it has a higher credibility level than the application in the virtual secure element. This is because the physical secure element further comprises an independent hardware which has a higher security and is anti-physical attack. The specific classification of the credibility level of application can be divided differently as actually required. As an example, the credibility level of application can be divided into three levels, i.e., low, intermediate and high, wherein an application that has been verified by the secure operating system on the secure element (SIM card, smart card, etc.) has a high credibility level, an application that has been verified by the secure operating system on the virtual secure element (VSE, virtual secure element) has an intermediate credibility level, and an application that has not been verified by the secure operating system has a low credibility level.

The credibility level of the carrier of the application is based on whether the carrier has been verified by the secure operating system.

By doing so, the invention can determine the actual credibility level of an application (i.e., the final credibility level of application) considering both the credibility level of application (the credibility of the application itself) and the credibility level of the carrier of application (the credibility of the environment in which the application actually operates). For example, when an application having a high credibility level operates in an environment having a low credibility level, the actual credibility level of application can be determined as an intermediate credibility level.

In an embodiment, the credibility level of application, the credibility level of the carrier of the application and an application identifier can be stored into a credibility level list. When an application is chosen and started to serve as the current application, the final credibility level of the current application is acquired according to this credibility level list. As an example, the final credibility level of the current application can be shown in the way of text (e.g., a text "high" shown in the display area represents a high credibility level, "intermediate" represents an intermediate credibility level, and "low" represents a low credibility level), image, etc., and the level can be represented by colors.

Fig. 2 is a schematic view of a mobile device capable of indicating an operating environment according to an embodiment of the invention. As shown in Fig. 2, the mobile device comprises a personalized information module and an indicator module, wherein the personalized information module is used for generating personalized information and storing the personalized information in a storage area that can be only accessed by the indicator module in a secure operating system, and the indicator module is used for displaying the personalized information on a display area of the mobile device when the mobile device enters the secure operating system so as to inform the user of the currently running operating system.

It is understood that the various aspects and/or embodiments described herein are merely examples, and other aspects and/or embodiments can be used. Modifications in terms of structures and functions can be made without departing from the scope of the appended claims.

## Claims

1. A method for indicating an operating environment of a mobile device comprising the following steps:
generating personalized information when the mobile device is started for the first time and storing the personalized information in a storage area that can be only accessed by a secure operating system; and
displaying the personalized information on a display area of the mobile device when the mobile device enters the secure operating system so as to inform the user of the currently running operating system and
displaying a final credibility level of the currently operating application on the display area of the mobile device when the mobile device is running in the secure operating system so as to inform the user of the security of the currently operating application;
wherein the final credibility level of application is generated based on the credibility level of application and the credibility level of a carrier of the application;
the credibility level of application is based on whether the application has been verified by the secure operating system and/or based on the carrier of the application, and wherein the carrier is a physical secure element or a virtual secure element, and
the credibility level of the carrier of the application is based on whether the carrier has been verified by the secure operating system.

2. The method according to claim 1, further comprising the following step:
generating the personalized information based on an input from the user, the personalized information comprising text, image or a combination of text and image.

3. The method according to claim 1, Further comprising the following step:
storing the credibility level of application, the credibility level of the carrier of the application and an application identifier into a credibility level list, and
acquiring the final credibility level of current application according to the credibility level list when an application is chosen and started to server as the current application.

4. A mobile device capable of indicating an operating environment, the mobile device comprising:
a personalized information module configured to generate personalized information when the mobile device is started for the first time and to store the personalized information in a storage area that can be only accessed by an indicator module in a secure operating system, and
the indicator module is configured to display the personalized information on a display area of the mobile device when the mobile device enters the secure operating system so as to inform the user of the currently running operating system;
wherein the indicator module is further configured to display a final credibility level of the currently operating application on the display area of the mobile device when the mobile device is running in the secure operating system so as to inform the user of the security of the currently operating application;
the final credibility level of application is generated based on the credibility level of application and the credibility level of a carrier of the application, wherein
the credibility level of application is based on whether the application has been verified by the secure operating system and/or based on the carrier of the application, and wherein the carrier is a physical secure element or a virtual secure element, and
the credibility level of the carrier of the application is based on whether the carrier has been verified by the secure operating system.

5. The mobile device according to claim 4, wherein:
the personalized information module is configured to generate the personalized information based on an input from the user, the personalized information comprising text, image or a combination of text and image.

6. The mobile device according to claim 4, wherein:
the indicator module is further configured to store the credibility level of application, the credibility level of the carrier of the application and an application identifier into a credibility level list, and
the indicator module is configured to acquire the final credibility level of current application according to the credibility level list when an application is chosen and started to server as the current application

## Patentansprüche

1. Verfahren zur Anzeige einer Betriebsumgebung einer mobilen Einrichtung, das die folgenden Schritte umfasst:
Erzeugen personalisierter Informationen, wenn die mobile Einrichtung zum ersten Mal gestartet wird, und Speichern der personalisierten Informationen in einem Speicherbereich, auf den nur von einem sicheren Betriebssystem zugegriffen werden kann; und
Anzeigen der personalisierten Informationen auf einem Anzeigebereich der mobilen Einrichtung, wenn die mobile Einrichtung in das sichere Betriebssystem eintritt, derart dass der Benutzer über das gegenwärtig laufende Betriebssystem informiert wird, und
Anzeigen eines endgültigen Glaubwürdigkeitsniveaus der gegenwärtig betriebenen Anwendung auf dem Anzeigebereich der mobilen Einrichtung, wenn die mobile Einrichtung in dem sicheren Betriebssystem läuft, derart dass der Benutzer über die Sicherheit der gegenwärtig betriebenen Anwendung informiert wird;
wobei das endgültige Glaubwürdigkeitsniveau der Anwendung basierend auf dem Glaubwürdigkeitsniveau der Anwendung und dem Glaubwürdigkeitsniveau eines Trägers der Anwendung erzeugt wird;
das Glaubwürdigkeitsniveau der Anwendung darauf basiert, ob die Anwendung von dem sicheren Betriebssystem überprüft wurde, und/oder auf dem Träger der Anwendung basiert und wobei der Träger ein physikalisches sicheres Element oder ein virtuelles sicheres Element ist, und
das Glaubwürdigkeitsniveau des Trägers der Anwendung darauf basiert, ob der Träger von dem sicheren Betriebssystem überprüft wurde.

2. Verfahren nach Anspruch 1, das ferner den folgenden Schritt umfasst:
Erzeugen der personalisierten Informationen basierend auf einer Eingabe von dem Benutzer, wobei die personalisierten Informationen Text, Bild oder eine Kombination von Text und Bild umfassen.

3. Verfahren nach Anspruch 1, das ferner die folgenden Schritte umfasst:
Speichern des Glaubwürdigkeitsniveaus der Anwendung, des Glaubwürdigkeitsniveaus des Trägers der Anwendung und einer Anwendungskennung in einer Glaubwürdigkeitsniveauliste, und
Erfassen des endgültigen Glaubwürdigkeitsniveaus der gegenwärtigen Anwendung gemäß der Glaubwürdigkeitsniveauliste, wenn eine Anwendung ausgewählt und an den Server als die gegenwärtige Anwendung gestartet wird.

4. Mobile Einrichtung, die in der Lage ist, eine Betriebsumgebung anzugeben, wobei die mobile Einrichtung umfasst:
ein Personalisierte-Informationen-Modul, das so ausgestaltet ist, dass es personalisierte Informationen erzeugt, wenn die mobile Einrichtung das erste Mal gestartet wird, und die personalisierten Informationen in einem Speicherbereich speichert, auf den nur von einem Anzeigermodul in einem sicheren Betriebssystem zugegriffen werden kann, und
das Anzeigermodul so ausgestaltet ist, dass es die personalisierten Informationen auf einem Anzeigebereich der mobilen Einrichtung anzeigt, wenn die mobile Einrichtung in das sichere Betriebssystem eintritt, derart dass der Benutzer über das gegenwärtig laufende Betriebssystem informiert wird;
wobei das Anzeigermodul ferner so ausgestaltet ist, dass es ein endgültiges Glaubwürdigkeitsniveau der gegenwärtig betriebenen Anwendung auf dem Anzeigebereich der mobilen Einrichtung anzeigt, wenn die mobile Einrichtung in dem sicheren Betriebssystem läuft, derart dass der Benutzer über die Sicherheit der gegenwärtig betriebenen Anwendung informiert wird;
das endgültige Glaubwürdigkeitsniveau der Anwendung basierend auf dem Glaubwürdigkeitsniveau der Anwendung und dem Glaubwürdigkeitsniveau eines Trägers der Anwendung erzeugt wird, wobei
das Glaubwürdigkeitsniveau der Anwendung darauf basiert, ob die Anwendung von dem sicheren Betriebssystem überprüft wurde, und/oder auf dem Träger der Anwendung basiert und wobei der Träger ein physikalisches sicheres Element oder ein virtuelles sicheres Element ist, und
das Glaubwürdigkeitsniveau des Trägers der Anwendung darauf basiert, ob der Träger von dem sicheren Betriebssystem überprüft wurde.

5. Mobile Einrichtung nach Anspruch 4, wobei
das Personalisierte-Informationen-Modul so ausgestaltet ist, dass es die personalisierten Informationen basierend auf einer Eingabe von dem Benutzer erzeugt, wobei die personalisierten Informationen Text, Bild oder eine Kombination von Text und Bild umfassen.

6. Mobile Einrichtung nach Anspruch 4, wobei das Anzeigermodul ferner so ausgestaltet ist, dass es das Glaubwürdigkeitsniveau der Anwendung, das Glaubwürdigkeitsniveau des Trägers der Anwendung und eine Anwendungskennung in einer Glaubwürdigkeitsniveauliste speichert, und
das Anzeigermodul so ausgestaltet ist, dass es das endgültige Glaubwürdigkeitsniveau der gegenwärtigen Anwendung gemäß der Glaubwürdigkeitsniveauliste erfasst, wenn eine Anwendung ausgewählt und an den Server als die gegenwärtige Anwendung gestartet wird.

## Revendications

1. Un procédé pour indiquer un environnement d'exploitation d'un dispositif mobile comprenant les étapes suivantes:
le fait de générer des informations personnalisées lorsque le dispositif mobile est démarré pour la première fois et de stocker les informations personnalisées dans une zone de stockage à laquelle peut uniquement accéder un système d'exploitation sécurisé; et
le fait d'afficher les informations personnalisées sur une zone d'affichage du dispositif mobile lorsque le dispositif mobile entre dans le système d'exploitation sécurisé de manière à informer l'utilisateur du système d'exploitation en cours de fonctionnement, et
le fait d'afficher un niveau de crédibilité final de l'application en cours de fonctionnement sur la zone d'affichage du dispositif mobile lorsque le dispositif mobile fonctionne dans le système d'exploitation sécurisé afin d'informer l'utilisateur de la sécurité de l'application en cours de fonctionnement,
le niveau de crédibilité final de l'application étant généré en fonction du niveau de crédibilité de l'application et du niveau de crédibilité du support de l'application;
le niveau de crédibilité de l'application étant basé sur le fait que l'application a été vérifiée ou pas par le système d'exploitation sécurisé et / ou étant basé sur le support de l'application, et le support étant un élément sécurisé physique ou un élément sécurisé virtuel, et
le niveau de crédibilité du support de l'application étant basé sur le fait que le support a été vérifié ou pas par le système d'exploitation sécurisé.

2. Le procédé selon la revendication 1, comprenant en outre l'étape suivante:
le fait de générer les informations personnalisées à partir d'une saisie de l'utilisateur, les informations personnalisées comprenant du texte, de l'image ou une combinaison de texte et d'image.

3. Le procédé selon la revendication 1, comprenant en outre l'étape suivante:
le fait de stocker le niveau de crédibilité de l'application, le niveau de crédibilité du support de l'application et un identifiant d'application dans une liste de niveaux de crédibilité, et
le fait d'acquérir le niveau de crédibilité final de l'application en cours en fonction de la liste des niveaux de crédibilité lorsqu'une application est choisie et lancée sur le serveur en tant qu'application en cours.

4. Un dispositif mobile apte à indiquer un environnement d'exploitation, le dispositif mobile comprenant:
un module d'informations personnalisées configuré pour générer des informations personnalisées lorsque le dispositif mobile est démarré pour la première fois et pour stocker les informations personnalisées dans une zone de stockage à laquelle peut uniquement accéder un module indicateur dans un système d'exploitation sécurisé, et
le module indicateur est configuré pour afficher les informations personnalisées sur une zone d'affichage du dispositif mobile lorsque le dispositif mobile entre dans le système d'exploitation sécurisé afin d'informer l'utilisateur du système d'exploitation en cours d'exécution;
le module indicateur étant en outre configuré pour afficher un niveau de crédibilité final de l'application en cours de fonctionnement sur la zone d'affichage du dispositif mobile lorsque le dispositif mobile fonctionne dans le système d'exploitation sécurisé afin d'informer l'utilisateur de la sécurité de l'application en cours de fonctionnement;
le niveau de crédibilité final de l'application étant généré en fonction du niveau de crédibilité de l'application et du niveau de crédibilité d'un support de l'application,
le niveau de crédibilité de l'application étant basé sur le fait que l'application a été vérifiée ou pas par le système d'exploitation sécurisé et / ou basé sur le support de l'application, et le support étant un élément sécurisé physique ou un élément sécurisé virtuel, et
le niveau de crédibilité du support de l'application étant basé sur le fait que le support a été vérifié ou pas par le système d'exploitation sécurisé.

5. Le dispositif mobile selon la revendication 4, dans lequel:
le module d'informations personnalisées est configuré pour générer les informations personnalisées sur la base d'une entrée de l'utilisateur, les informations personnalisées comprenant du texte, de l'image ou une combinaison de texte et d'image.

6. Le dispositif mobile selon la revendication 4, dans lequel:
le module indicateur est en outre configuré pour stocker le niveau de crédibilité de l'application, le niveau de crédibilité du support de l'application et un identifiant d'application dans une liste de niveaux de crédibilité, et
le module indicateur est configuré pour acquérir le niveau de crédibilité final de l'application en cours en fonction de la liste des niveaux de crédibilité lorsqu'une application est choisie et lancée sur le serveur en tant qu'application en cours.
